# EUROPEAN PATENT APPLICATION

(11) **EP 4 715 894 A1**
(43) Date of publication of application: **25.03.2026**
(21) Application number: 25201527.6
(22) Date of filing: 11.09.2025
(51) Int. Cl.: H01M 4/139, H01M 4/62, H01M 10/052, H01M 10/0562, H01M 4/02

(54) **METHOD OF MANUFACTURING A POSITIVE ELECTRODE SLURRY FOR ALL-SOLID-STATE BATTERY AND POSITIVE ELECTRODE MANUFACTURED BY THE SAME FOR ALL-SOLID-STATE BATTERY**

(30) Priority: 19.09.2024 KR 20240126570
(71) Applicant: SAMSUNG SDI CO., LTD., Yongin-si, Gyeonggi-do 17084 (KR)
(72) Inventor: Kim, Jinhee, 17084 Yongin-si, Gyeonggi-do (KR); You, Hoseon, 17084 Yongin-si, Gyeonggi-do (KR); Kang, Dongwoo, 17084 Yongin-si, Gyeonggi-do (KR); Oh, Daeyang, 17084 Yongin-si, Gyeonggi-do (KR)
(74) Representative: Michalski Hüttermann & Partner Patentanwälte mbB

(57) **Abstract**

Disclosed are methods of manufacturing positive electrode slurries for all-solid-state batteries, and positive electrodes manufactured using the methods. The method includes preparing a first mixture including a positive electrode active material and a solid electrolyte, adding a binder solution to the first mixture to perform a first kneading process on a second mixture having a solid content adjusted to a range of ≥ 94 wt% to ≤ 95 wt%, adding the binder solution to the second mixture to perform a second kneading process on a third mixture having a solid content adjusted to a range of ≥ 90 wt% to ≤ 93.9 wt%, and adding a conductive material solution to the third mixture to perform a mixing process on a fourth mixture having a solid content adjusted to a range of ≥ 70 wt% to ≤ 89.9 wt%.

## Description

### CROSS-REFERENCE TO RELATED APPLICATION

This application claims priority to Korean Patent Application No. 10-2024-0126570 filed on September 19, 2024 in the Korean Intellectual Property Office.

### BACKGROUND

Examples of the present disclosure relate to a method of manufacturing a positive electrode slurry for an all-solid-state battery, and a positive electrode for an all-solid-state battery manufactured by the method.

There is increasing development of high-energy density and safe batteries driven by industrial demands. For example, lithium ion batteries are commercialized not only in formation-related and communication devices, but also in the automotive industry. In the automotive industry, safety is emphasized due to the direct relation of safety to human safety.

There are all-solid-state batteries that use a solid electrolyte in place of a liquid electrolyte. As an all-solid-state battery does not use a flammable organic dispersion medium, the possibility of fire or explosion may be significantly reduced even in the event of a short-circuit. Accordingly, an all-solid-state battery may significantly increase safety, compared to a lithium ion battery using a liquid electrolyte.

### SUMMARY

An example embodiment of the present disclosure includes a method of manufacturing a positive electrode slurry with improved dispersion characteristics.

An example embodiment of the present disclosure includes a high-performance positive electrode for an all-solid-state battery, and an all-solid-state battery including the same.

According to an example embodiment of the present disclosure, a method of manufacturing a positive electrode slurry for an all-solid-state battery may include preparing a first mixture including a positive electrode active material and a solid electrolyte; adding a binder solution to the first mixture to perform a first kneading process on a second mixture having an amount of solid content adjusted to a range of ≥ 94 wt% to ≤ 95 wt%; adding the binder solution to the second mixture to perform a second kneading process on a third mixture having an amount of solid content adjusted to a range of ≥ 90 wt% to ≤ 93.9 wt%; and adding a conductive material solution to the third mixture to perform a mixing process on a fourth mixture having an amount of solid content adjusted to a range of ≥ 70 wt% to ≤ 89.9 wt%.

According to an example embodiment of the present disclosure, a method of manufacturing a positive electrode slurry for an all-solid-state battery may include preparing a first mixture including a positive electrode active material and a solid electrolyte; adding a binder solution to the first mixture to perform a first kneading process on a second mixture adjusted to have a first amount of solid content; performing a multi-stage mixing process on the second mixture; adding the binder solution to the second mixture released from the multi-stage mixing process to perform a second kneading process on a third mixture adjusted to have a second amount of solid content; and adding a conductive material solution to the third mixture to perform a mixing process on a fourth mixture adjusted to have a third amount of solid content. The first amount of solid content may be greater than the second amount of solid content. The second amount of solid content may be greater than the third amount of solid content.

According to an example embodiment of the present disclosure, a positive electrode for an all-solid-state battery may include a positive electrode current collector and a positive electrode coating layer. The positive electrode coating layer may be prepared by coating on the positive electrode current collector a positive electrode slurry manufactured by the method discussed above.

### BRIEF DESCRIPTION OF DRAWINGS

FIG. 1 is a cross-sectional view illustrating an all-solid-state battery according to an example embodiment of the present disclosure.
FIG. 2 is a cross-sectional view illustrating an all-solid-state battery according to an example embodiment of the present disclosure.
FIG. 3 is a plan view illustrating an all-solid-state battery according to an example embodiment of the present disclosure.
FIG. 4 is a cross-sectional view illustrating an all-solid-state battery according to an example embodiment of the present disclosure
FIG. 5 is a cross-sectional view illustrating an all-solid-state battery according to an example embodiment of the present disclosure.
FIG. 6 is a cross-sectional view illustrating an all-solid-state battery including a gasket structure according to an example embodiment of the present disclosure.
FIG. 7A is an enlarged view illustrating a positive electrode coating layer according to a comparative example.
FIG. 7B is an enlarged view illustrating a positive electrode according to an example embodiment of the present disclosure.
FIG. 8A is a diagram illustrating a method of manufacturing a positive electrode slurry according to an example embodiment of the present disclosure.
FIG. 8B is a diagram illustrating a method of manufacturing a positive electrode slurry according to an example embodiment of the present disclosure.
FIG. 9A illustrates a photograph showing states of mixtures according to processes in an example embodiment.
FIG. 9B illustrates a photograph showing states of mixtures according to processes in a comparative example.
FIG. 10A is a graph illustrating a measured result of shear viscosity of a positive electrode slurry according to an example embodiment.
FIG. 10B is a graph illustrating a measured result of shear viscosity of a positive electrode slurry according to a comparative example.
FIG. 11 is a graph illustrating evaluation results of pressure filtration of a positive electrode slurry according to an example embodiment, and a positive electrode slurry according to a comparative example.

### DETAILED DESCRIPTION OF EMBODIMENTS

In order to sufficiently understand the configuration and effect of the present disclosure, some example embodiments of the present disclosure are described with reference to the accompanying drawings. It may be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be "directly on" the other element, or intervening elements may be present therebetween. In the drawings, thicknesses of some components may be exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions may be exaggerated for effectively explaining the technical contents. Accordingly, regions illustrated as examples in the drawings have general properties, and shapes of regions illustrated in the drawings as examples are used to disclose specific shapes but are not limited to the scope of the present disclosure. It is understood that, although the terms "first," "second," "third," and the like, may be used herein to describe various elements, these elements may not be limited by these terms. These terms are only used to distinguish one element from another element. The example embodiments explained and illustrated herein include complementary embodiments thereof.

The terms in this description are merely used to describe various example embodiments, but are not intended to limit the present disclosure. Unless otherwise specially noted in this description, the expression of singular form may include the expression of plural form. The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter (D₅₀) where a cumulative volume is about 50 volume % in a particle size distribution. The average particle diameter (D₅₀) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and an average particle diameter (D₅₀) value may thus be obtained through a calculation. In another example, a laser scattering method may be utilized to measure the average particle diameter (D₅₀). In the laser scattering method, a target particle is dispersed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

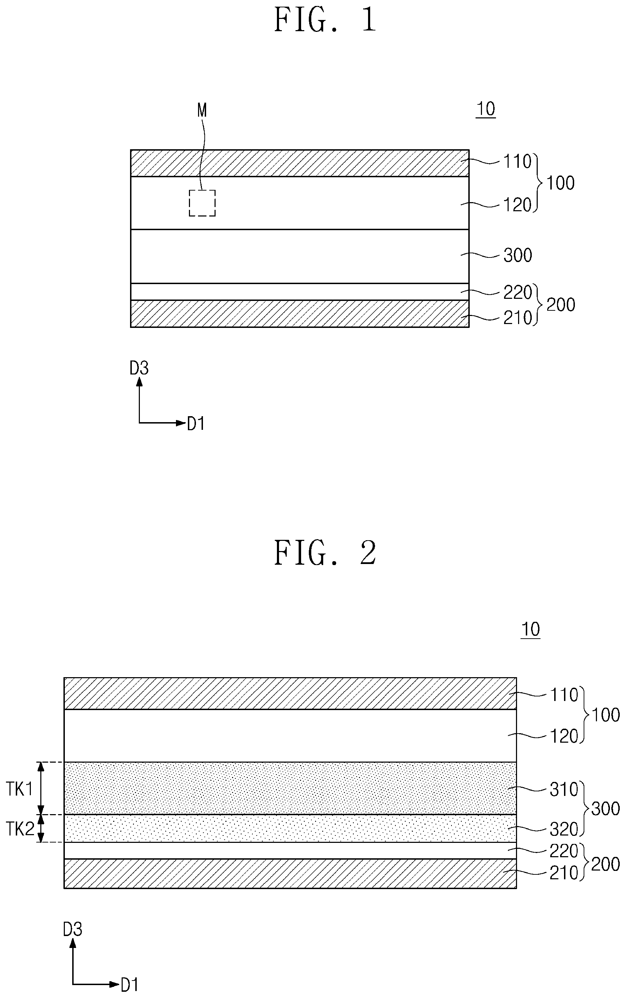

FIG. 1 illustrates a cross-sectional view showing an all-solid-state battery 10 according to an example embodiment of the present disclosure.

Referring to FIG. 1, the all-solid-state battery 10 may include a positive electrode layer 100, a negative electrode layer 200 opposite to the positive electrode layer 100, and a solid electrolyte layer 300 between the positive electrode layer 100 and the negative electrode layer 200. The present disclosure, however, is not limited thereto, and the all-solid-state battery 10 may further include an additional functional layer, such as, e.g., an adhesion enhancement layer, between the positive electrode layer 100 and the solid electrolyte layer 300 or between the negative electrode layer 200 and the solid electrolyte layer 300.

The positive electrode layer 100 may include a positive electrode current collector 110 and a positive electrode coating layer 120 on the positive electrode current collector 110. The positive electrode coating layer 120 may include a positive electrode active material, a solid electrolyte, a conductive material, and a binder.

The positive electrode current collector 110 may provide a reference surface on which the positive electrode coating layer 120 is disposed. The positive electrode current collector 110 may include a plate or foil including, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

In another example embodiment of the present disclosure, the positive electrode current collector 110 may be omitted. Although not shown, to increase adhesion between the positive electrode current collector 110 and the positive electrode coating layer 120, a carbon layer having a thickness in a range of ≥ 0.1 µm to ≤ 4 µm may further be disposed between the positive electrode current collector 110 and the positive electrode coating layer 120.

The positive electrode layer 100 of the all-solid-state battery 10 according to the example embodiment may be manufactured using a positive electrode slurry which is discussed below. The positive electrode layer 100 may be manufactured using an ordinary technique for electrode production, but the present disclosure is not limited thereto. For example, doctor blading, spray, bar coating, slot-die coating, and the like, may be utilized to coat and dry a positive electrode slurry on the positive electrode current collector 110, and the mixture may subsequently be pressed to manufacture an electrode. The positive electrode slurry may be formed into the positive electrode coating layer 120.

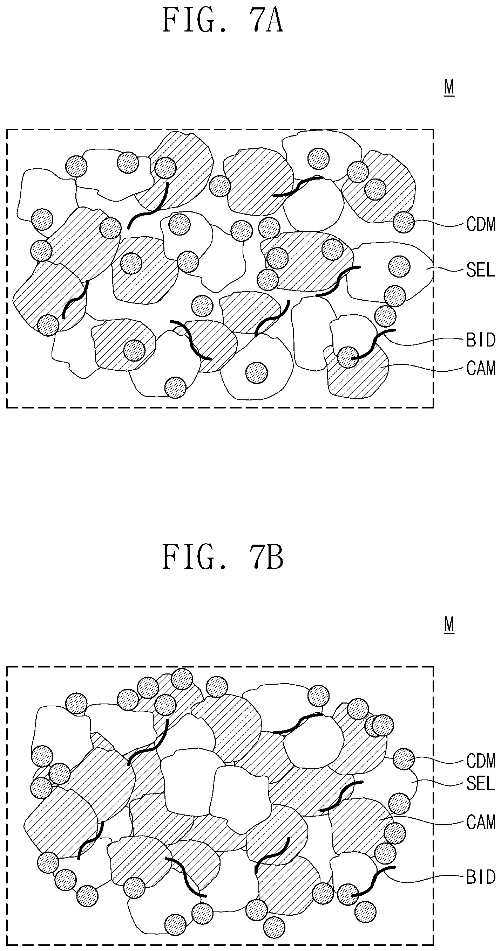

The positive electrode coating layer 120 is discussed in detail below with reference to FIG. 7A.

Referring still to FIG. 1, the negative electrode layer 200 may include a negative electrode current collector 210, and a negative electrode active material layer 220 on the negative electrode current collector 210. The negative electrode active material layer 220 may include a negative electrode active material and a binder.

The negative electrode current collector 210 may provide a reference surface on which the negative electrode active material layer 220 is disposed. The negative electrode current collector 210 may include a material that does not react, or that does not substantially react, with lithium, for example, a material that does not form an alloy or a compound with lithium. The material included in the negative electrode current collector 210 may include, for example, at least one of copper (Cu), stainless steel, titanium (Ti), iron (Fe), cobalt (Co), or nickel (Ni), but the present disclosure is not limited thereto and any material may be applicable as long as the material is included as an electrode current collector. The negative electrode current collector 210 may have a thickness in a range of, for example, ≥ 1 µm to ≤ 20 µm, ≥ 5 µm to ≤ 15 µm, or ≥ 7 µm to ≤ 10 µm.

The negative electrode current collector 210 may be formed of or include one of the metals mentioned above, an alloy of two or more of the metals mentioned above, or a coating material. The negative electrode current collector 210 may have, for example, a plate shape or a foil shape. In an example embodiment, the negative electrode current collector 210 may be omitted.

The negative electrode active material included in the negative electrode active material layer 220 may have a particulate shape. The particulate-shaped negative electrode active material may have a medium-sized average particle diameter (D₅₀) that is, for example, equal to or less than about 4 µm, 2 µm, 1 µm, or 900 nm. The medium-sized average particle diameter (D₅₀) of the negative electrode active material may range, for example, from ≥ 10 nm to ≤ 4 µm, from ≥ 10 nm to ≤ 2 µm, or from ≥ 10 nm to ≤ 900 nm. As the negative electrode active material has a medium-sized average particle diameter (D₅₀) that falls within the range above, absorption and/or desorption of lithium may be more readily achieved during charge and discharge. The average particle diameter (D₅₀) may be a median diameter measured with a laser-type particle size distribution analyzer.

The negative electrode active material may include, for example, one or more of a carbon-based negative electrode active material, a metallic negative electrode active material, and a metalloid negative electrode active material.

The carbon-based negative electrode active material may be amorphous carbon. The amorphous carbon may be or include, for example, at least one of carbon black (CB), acetylene black (AB), furnace black (FB), ketjen black (KB), or graphene, but the present disclosure is not limited thereto. The amorphous carbon may be or include carbon that either lacks crystallinity, or that has extremely or substantially low crystallinity, and may be distinguished from crystalline carbon or graphite-based carbon.

The metallic or metalloid negative electrode active material may include one or more of gold (Au), platinum (Pt), palladium (Pd), silicon (Si), silver (Ag), aluminum (Al), bismuth (Bi), tin (Sn), and zinc (Zn), but the present disclosure is not limited thereto, and may be a metallic or metalloid negative electrode active material that forms an alloy or compound with lithium. As nickel (Ni) does not form an alloy with lithium, nickel (Ni) may not be included as a metallic negative electrode active material.

The negative electrode active material layer 220 may include one of the negative electrode active materials mentioned above, or a mixture of different ones of the negative electrode active materials mentioned above. For example, the negative electrode active material layer 220 may include only amorphous carbon, or may include at least one of gold (Au), platinum (Pt), palladium (Pd), silicon (Si), silver (Ag), aluminum (Al), bismuth (Bi), tin (Sn), and zinc (Zn).

In an example embodiment, the negative electrode active material layer 220 may include a mixture of amorphous carbon and at least one of gold (Au), platinum (Pt), palladium (Pd), silicon (Si), silver (Ag), aluminum (Al), bismuth (Bi), tin (Sn), and zinc (Zn). In the mixture of amorphous carbon and a material such as gold (Au), the amorphous carbon and the material may be mixed in a weight ratio in a range of, for example, ≥ 10:1 to ≤ 1:2, ≥ 5:1 to ≤ 1:1, or ≥ 4:1 to ≤ 2:1, but the present disclosure is not necessarily limited thereto, and the weight ratio may be chosen based on required properties of the all-solid-state battery 10. As the negative electrode active material has the above-discussed composition, the all-solid-state battery 10 may improve in cycle characteristics.

The binder included in the negative electrode active material layer 220 may include, for example, at least one of styrene-butadiene rubber (SBR), polytetrafluoroethylene, polyvinylidenefluoride, polyethylene, vinylidenefluoride/hexafluoropropylene copolymer, polyacrylonitrile, or polymethylmethacrylate, but the present disclosure is not limited thereto. The binder may be configured as a single binder, or as a plurality of different binders.

As the negative electrode active material layer 220 includes the binder, the negative electrode active material layer 220 may be more stably formed on the negative electrode current collector 210. For example, an increased adhesion may be provided between the negative electrode active material layer 220 and the negative electrode current collector 210. In addition, cracks of the negative electrode active material layer 220 may be reduced or suppressed despite the change in volume and/or relative position of the negative electrode active material layer 220 during charge and discharge. When the negative electrode active material layer 220 includes no binder, the negative electrode active material layer 220 may be readily separated from the negative electrode current collector 210. As the negative electrode active material layer 220 is separated from the negative electrode current collector 210, on a region where the negative electrode current collector 210 is exposed, the negative electrode current collector 210 may be in contact with the solid electrolyte layer 300, and there may thus be an increase in probability of the occurrence of short circuit.

The negative electrode active material layer 220 may be manufactured by, for example, providing on the negative electrode current collector 210 a mixture in which a material of the negative electrode active material layer 220 is dispersed. As the binder is included in the material of the negative electrode active material layer 220, it may be possible to stably disperse the negative electrode active material into the mixture. For example, when screen printing is performed to coat the mixture on the negative electrode current collector 210, it may be possible to reduce or suppress screen clogging caused by the binder (e.g., a clogging resulting from aggregates of the negative electrode active material).

The negative electrode active material layer 220 may further include a different additive, in addition to the negative electrode active material and the binder. For example, the negative electrode active material layer 220 may further include a filler, a coating agent, a dispersant, and an ionic conductivity agent.

The negative electrode active material layer 220 may have a thickness that is lower than the thickness of the positive electrode coating layer 120. For example, the thickness of the negative electrode active material layer 220 may be equal to or less than about 50%, 40%, 30%, 20%, 10%, or 5% of the thickness of the positive electrode coating layer 120. The thickness of the negative electrode active material layer 220 may range, for example, from ≥ 1 µm to ≤ 20 µm, from ≥ 2 µm to ≤ 10 µm, or from ≥ 3 µm to ≤ 7 µm. When the negative electrode active material layer 220 has an excessively or substantially small thickness, lithium dendrites formed between the negative electrode active material layer 220 and the negative electrode current collector 210 may collapse the negative electrode active material layer 220, thereby reducing cycle characteristics of the all-solid-state battery 10. When the negative electrode active material layer 220 has an excessively large thickness, the all-solid-state battery 10 may have a reduced energy density, and an internal resistance of the all-solid-state battery 10 may increase due to the negative electrode active material layer 220, thereby reducing cycle characteristics of the all-solid-state battery 10.

A reduction in thickness of the negative electrode active material layer 220 may cause, for example, a decrease in charge capacity of the negative electrode active material layer 220. The charge capacity of the negative electrode active material layer 220 may be equal to or less than about 50%, 40%, 30%, 20%, 10%, 5%, or 2% of the charge capacity of the positive electrode coating layer 120. The charge capacity of the negative electrode active material layer 220 may be in a range of ≥ 0.1% to ≤ 50%, ≥ 0.1% to ≤ 40%, ≥ 0.1% to ≤ 30%, ≥ 0.1% to ≤ 20%, ≥ 0.1% to ≤ 10%, ≥ 0.1% to ≤ 5%, or ≥ 0.1% to ≤ 2% of the charge capacity of the positive electrode coating layer 120. When the negative electrode active material layer 220 has an excessively or substantially small charge capacity, the negative electrode active material layer 220 may have a considerably small thickness, and there may be an occurrence of failure the same as when the thickness of the negative electrode active material layer 220 is considerably small. An excessive or substantial increase in charge capacity of the negative electrode active material layer 220 may cause the occurrence of failure due to an excessive increase in thickness of the negative electrode active material layer 220.

A charge capacity of the positive electrode coating layer 120 may be obtained by multiplying a charge capacity density (mAh/g) of the positive electrode active material by a mass of the positive electrode active material in the positive electrode coating layer 120. When the positive electrode coating layer 120 includes various types of positive electrode active material, a value of [charge capacity density × mass] for each positive electrode active material may be calculated, and a sum of these values of the positive electrode active materials may correspond to the charge capacity of the positive electrode coating layer 120. The charge capacity of the negative electrode active material layer 220 may also be calculated by the same method. For example, the charge capacity of the negative electrode active material layer 220 may be obtained by multiplying a charge capacity density (mAh/g) of the negative electrode active material by a mass of the negative electrode active material in the negative electrode active material layer 220.

When the negative electrode active material layer 220 includes various types of negative electrode active material, a value of [charge capacity density × mass] for each negative electrode active material may be calculated, and a sum of these values of the negative electrode active materials may correspond to the charge capacity of the negative electrode active material layer 220. Herein, the charge capacity density of each of the positive electrode active material and the negative electrode active material may be a capacity that is estimated using an all-solid-state half-cell in which lithium metal is included as a counter electrode. The charge capacity of each of the positive electrode coating layer 120 and the negative electrode active material layer 220 may be directly measured through a charge capacity measurement using the all-solid-state half-cell. A charge capacity density may be obtained by dividing the measured charge capacity by a mass of each active material. In this description, the term "charge capacity" of each of the positive electrode coating layer 120 and the negative electrode active material layer 220 may refer to an initial charge capacity measured during a first cycle of charge.

Although not shown, a carbon layer may further be included to increase adhesion between the negative electrode active material layer 220 and the solid electrolyte layer 300.

Referring again to FIG. 1, the solid electrolyte layer 300 may be disposed between the positive electrode layer 100 and the negative electrode layer 200, and may include a sulfide-based solid electrolyte with desired or improved lithium ionic conductivity. The solid electrolyte included in the solid electrolyte layer 300 may include a material that is the same as, or different from, the material of the solid electrolyte included in the positive electrode coating layer 120.

The solid electrolyte layer 300 according to an example embodiment may include a sulfide-based solid electrolyte. The sulfide-based solid electrolyte may be prepared by performing, for example, a melt quenching method or a mechanically milling method on a starting raw material such as Li₂S or P₂S₅. In addition, the resultant may be thermally treated after the treatment mentioned above. The solid electrolyte may be in an amorphous state, a crystalline state, or a mixed state of amorphous and crystalline states. The solid electrolyte may include at least sulfur (S), phosphorus (P), and lithium (Li) among component elements included in the sulfide-based solid electrolyte mentioned above. For example, the solid electrolyte may be or include a material including Li₂S-P₂S₅. When a material including Li₂S-P₂S₅ is utilized as a sulfide-based solid electrolyte material of the solid electrolyte, a mixing molar ratio of Li₂S and P₂S₅ may be in a range of ≥ 50:50 to ≤ 90:10.

The sulfide-based solid electrolyte may be or include, for example, an argyrodite-type compound including at least one of Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤ 2). For example, the sulfide-based solid electrolyte may be or include an argyrodite-type compound including at least one of Li₆PS₅Cl, Li₆PS₅Br, and Li₆PS₅I.

In an example, the sulfide-based solid electrolyte may be or include an argyrodite-type compound including Li₇₋ₐMₐPS_{6-c}X_{c} (where 0 ≤ a ≤ 2 and 0 ≤ c ≤ 2). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density in a range of ≥ 1.5 g/cc to ≤ 2.0 g/cc. As the argyrodite-type solid electrolyte has a density that is equal to or greater than about 1.5 g/cc, it may be possible to decrease an internal resistance of an all-solid-state battery and to hinder or prevent a solid electrolyte layer from undergoing a short-circuit and penetration caused by the formation of lithium dendrites. The solid electrolyte may have an elastic modulus in a range of, for example, ≥ 15 GPa to ≤ 35 GPa.

The solid electrolyte layer 300 may further include a binder. The binder included in the solid electrolyte layer 300 may include, for example, at least one of styrene-butadiene rubber (SBR), polytetrafluoroethylene, polyvinylidenefluoride, or polyethylene, but the present disclosure is not limited thereto. The binder of the solid electrolyte layer 300 may be the same as, or different from, the binder of the positive electrode coating layer 120, or the binder of a negative electrode active material layer 220.

FIG. 2 is a cross-sectional view illustrating an all-solid-state battery 10 according to an example embodiment of the present disclosure.

Referring to FIG. 2, the solid electrolyte layer 300 may include a first solid electrolyte layer 310 and a second solid electrolyte layer 320. The first solid electrolyte layer 310 may be adjacent to the positive electrode layer 100, and the second solid electrolyte layer 320 may be adjacent to the negative electrode layer 200.

The first solid electrolyte layer 310 and the second solid electrolyte layer 320 may have different thicknesses from each other. The first solid electrolyte layer 310 may have a first thickness TK1, and the second solid electrolyte layer 320 may have a second thickness TK2. The first thickness TK1 may be greater than the second thickness TK2. For example, the first thickness TK1 may be about two to one hundred times the second thickness TK2.

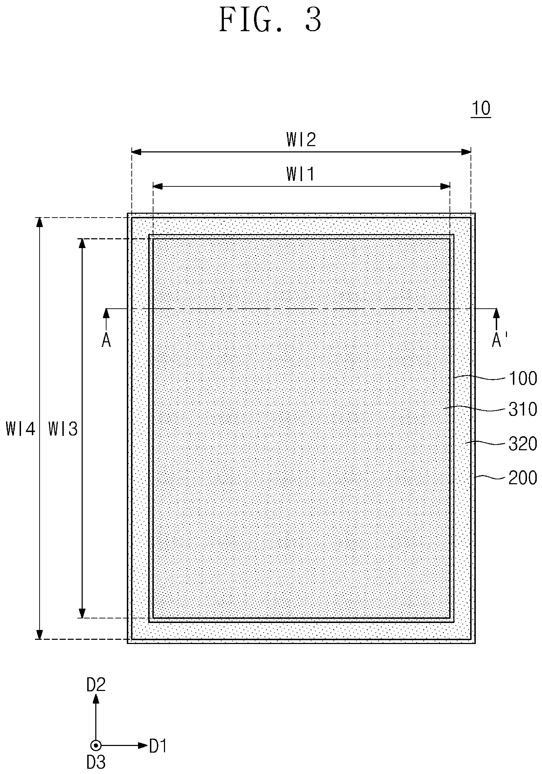

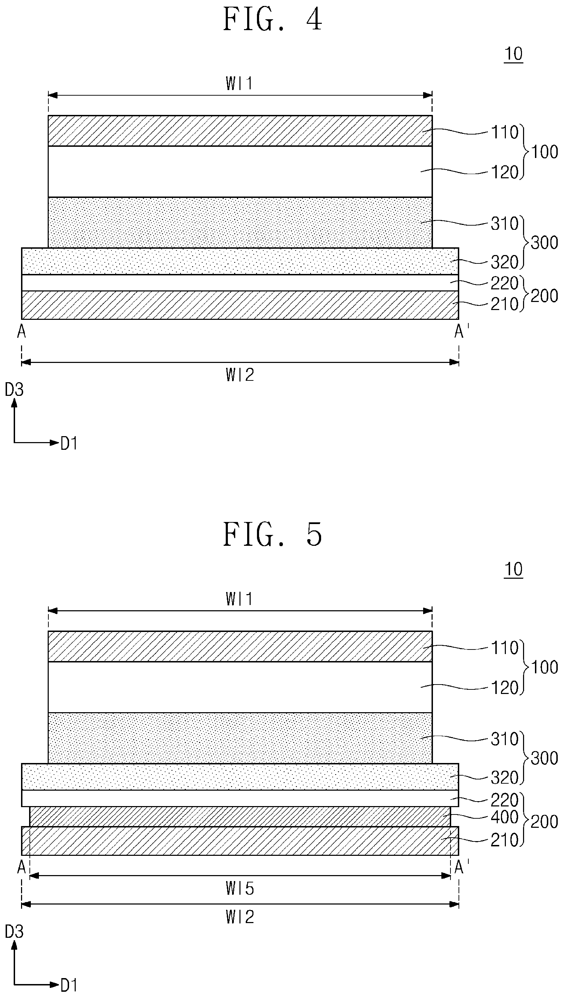

FIG. 3 illustrates a plan view showing an all-solid-state battery 10 according to an example embodiment of the present disclosure. FIG. 4 illustrates a cross-sectional view taken along line A-A' of FIG. 3. In the example embodiment that follows, a detailed description of technical features that are redundant to the features discussed above with reference to FIGS. 1 and 2 is omitted, and a difference thereof is discussed in detail.

Referring to FIGS. 3 and 4, an area of the positive electrode layer 100 and an area of the negative electrode layer 200 may be different from each other. For example, the area of the negative electrode layer 200 may be greater than the area of the positive electrode layer 100. The negative electrode layer 200 may completely overlap the positive electrode layer 100.

In an example embodiment of the present disclosure, the first solid electrolyte layer 310 may have substantially the same area as the area of the positive electrode layer 100. The second solid electrolyte layer 320 may have substantially the same area as the area of the negative electrode layer 200.

For example, the first solid electrolyte layer 310 may have a first width WI1 in a first direction D1. The second solid electrolyte layer 320 may have a second width WI2 in the first direction D1. The first width WI1 may be lower than the second width WI2. The first solid electrolyte layer 310 may have a third width WI3 in a second direction D2. The second solid electrolyte layer 320 may have a fourth width WI4 in the second direction D2. The third width WI3 may be lower than the fourth width WI4.

The all-solid-state battery 10 according to the example embodiment may be fabricated by forming a first stack of the positive electrode layer 100 and the first solid electrolyte layer 310, forming a second stack of the negative electrode layer 200 and the second solid electrolyte layer 320, and then laminating the first stack and the second stack.

FIG. 5 illustrates a cross-sectional view taken along line A-A' of FIG. 3, showing an all-solid-state battery according to an example embodiment of the present disclosure.

Referring to FIG. 5, the negative electrode layer 200 of the all-solid-state battery 10 may further include a lithium metal layer 400 between the negative electrode current collector 210 and the negative electrode active material layer 220. The lithium metal layer 400 may have an increased thickness when the all-solid-state battery 10 is charged. The negative electrode active material layer 220 may be configured as a protection layer for the lithium metal layer 400 and simultaneously or contemporaneously may reduce or suppress growth of lithium dendrites from the lithium metal layer 400.

The lithium metal layer 400 may be or include a thin metal layer including lithium or lithium alloy. The lithium alloy may be or include, for example, at least one of Li-Al alloy, Li-Sn alloy, Li-In alloy, Li-Ag alloy, Li-Au alloy, Li-Zn alloy, Li-Ge alloy, or Li-Si alloy, but any suitable lithium alloys may be included. The lithium metal layer 400 may include lithium or one of the alloys mentioned above. Alternatively, the lithium metal layer 400 may include various types of alloy.

The lithium metal layer 400 may have a fifth width WI5 in the first direction D1. The fifth width WI5 may be the same as, or may be greater than, the first width WI1. The fifth width WI5 may be the same as, or may be lower than, the second width WI2. For example, the fifth width WI5 may be greater than the first width WI1 and lower than the second width WI2.

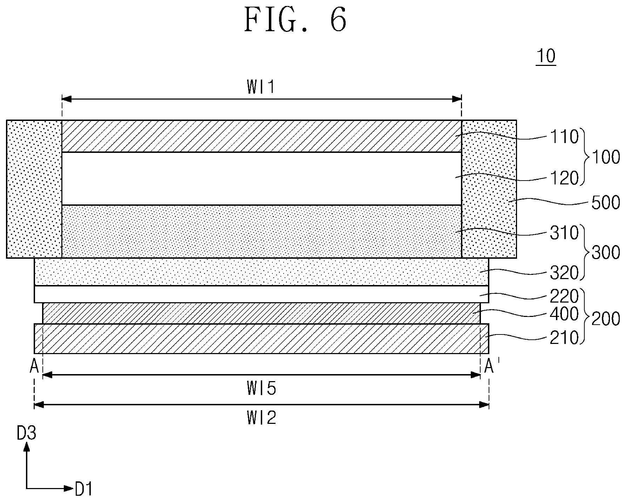

FIG. 6 is a cross-sectional view illustrating an all-solid-state battery 10 according to an example embodiment of the present disclosure.

Referring to FIG. 6, the all-solid-state battery 10 may include a gasket structure 500. A difference in area between the first stack and the second stack may produce a step difference on a lateral surface of the all-solid-state battery 10, and the gasket structure 500 may fill the step difference.

The gasket structure 500 may surround lateral surfaces in the first and second directions D1 and D2 of the first stack of the all-solid-state battery 10 (see FIG. 3). For example, a thickness of the gasket structure 500 may be substantially the same as the thickness of the first stack. Thus, even when the first stack and the second stack having different areas are stacked and pressed together, the all-solid-state battery 10 may be hindered or prevented from damage that may be due to the step difference on the lateral surface. The expression "substantially the same thickness" may be defined to refer to a thickness sufficient enough to reduce or prevent damage to the step difference on the lateral surface of the all-solid-state battery 10 even when the first stack and the second stack having different areas are stacked and pressed together.

### Positive Electrode Coating Layer

FIG. 7A is an enlarged cross-sectional view illustrating a positive electrode coating layer (see 120 of FIG. 1) according to a comparative example. FIG. 7A is an enlarged view of section "M" depicted in FIG. 1.

Referring to FIG. 7A, a positive electrode coating layer 120 according to a comparative example may have a composite particle shape in which a positive electrode active material CAM and a solid electrolyte SEL are combined through a binder BID. A conductive material CDM present in the composite particle may be substantially uniformly distributed within the particle and on a surface thereof.

In the positive electrode coating layer 120 according to a comparative example, the positive electrode active material CAM and the solid electrolyte SEL that are not agglomerated may not constitute an ion conduction pathway, but form a closed ion conduction pathway. The closed ion conduction pathway may cause a reduction in ionic conductivity of the positive electrode coating layer 120 and a waste of the positive electrode active material CAM and the solid electrolyte SEL, which may result in a decrease in battery energy density.

FIG. 7B is an enlarged cross-sectional view illustrating a positive electrode coating layer (see 120 of FIG. 1) according to an example embodiment of the present disclosure. FIG. 7B shows an enlarged view of section "M" depicted in FIG. 1.

Referring to FIG. 7B, a positive electrode coating layer 120 according to the present disclosure may include a positive electrode active material CAM, a solid electrolyte SEL, a conductive material CDM, and a binder BID. The positive electrode coating layer 120 may be manufactured by coating, on the positive electrode current collector 110, a positive electrode slurry which is discussed below.

The positive electrode coating layer 120 may include composite particles including the positive electrode active material CAM and the solid electrolyte SEL. In the positive electrode coating layer 120, the conductive material CDM may surround a surface of the composite particle. The solid electrolyte SEL may be substantially uniformly dispersed between the positive electrode active materials CAM.

According to an example embodiment, the positive electrode coating layer 120 may have a composite particle shape in which the positive electrode active material CAM and the solid electrolyte SEL are densely combined through the binder BID by a subsequently described method of manufacturing a positive electrode slurry. The conductive material CDM present in the composite particle may be present in trace amount between the positive electrode active material CAM and the solid electrolyte SEL. For example, the composite particle may contain almost no conductive material CDM.

In the positive electrode coating layer 120 according to an example embodiment, the positive electrode active material CAM and the solid electrolyte SEL that are densely combined may form a substantially smooth ion conduction pathway, and thus the positive electrode coating layer 120 may improve in ionic conductivity and energy density.

The positive electrode active material CAM may be or include a material that can reversibly absorb and desorb lithium ions. For example, the positive electrode active material CAM may include at least one of a lithium transition metal oxide (e.g., at least one of lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material CAM may be included alone or in a mixture of two or more substances.

The lithium transition metal oxide may be or include, for example, a compound represented by one of LiₐA_{1-b}B_{b}D₂ (where 0.90 ≤ a ≤ 1 and 0 ≤ b ≤ 0.5), LiₐE_{1-b}B_{b}O_{2-c}D_{c} (where 0.90 ≤ a ≤ 1, 0 ≤ b ≤ 0.5, and 0 ≤ c ≤ 0.05), LiE_{2-b}B_{b}O_{4-c}D_{c} (where 0 ≤ b ≤ 0.5 and 0 ≤ c ≤ 0.05), LiₐNi_{1-b-c}Co_{b}B_{c}D_{α} (where 0.90 ≤ a ≤ 1, 0 ≤ b ≤ 0.5, 0 ≤ c ≤ 0.05, and 0<α<2), LiₐNi_{1-b-c}Co_{b}B_{c}O_{2-α}F_{α} (where 0.90 ≤ a ≤ 1, 0 ≤ b ≤ 0.5, 0 ≤ c ≤ 0.05, and 0<α<2), LiₐNi_{1-b-c}Mn_{b}B_{c}D_{α} (where 0.90 ≤ a ≤ 1, 0 ≤ b ≤ 0.5, 0 ≤ c ≤ 0.05, and 0< α ≤ 2), LiₐNi_{1-b-c}Mn_{b}B_{c}O_{2-α}F_{α} (where 0.90 ≤ a ≤ 1, 0 ≤ b ≤ 0.5, 0 ≤ c ≤ 0.05, and 0<α<2), LiₐNi_{b}E_{c}G_{d}O₂ (where 0.90 ≤ a ≤ 1, 0 ≤ b ≤ 0.9, 0 ≤ c ≤ 0.5, and 0.001 ≤ d ≤ 0.1), LiₐNi_{b}Co_{c}Mn_{d}GₑO₂ (where 0.90 ≤ a ≤ 1, 0 ≤ b ≤ 0.9, 0 ≤ c ≤ 0.5, 0 ≤ d ≤ 0.5, and 0.001 ≤ e ≤ 0.1), LiₐNiG_{b}O₂ (where 0.9 ≤ a ≤ 1 and 0.001 ≤ b ≤ 0.1), LiₐCoG_{b}O₂ (where 0.90 ≤ a ≤ 1 and 0.001 ≤ b ≤ 0.1), LiₐMnG_{b}O₂ (where 0.90 ≤ a ≤ 1 and 0.001 ≤ b ≤ 0.1), LiₐMn₂G_{b}O₄ (where 0.90 ≤ a ≤ 1 and 0.001 ≤ b ≤ 0.1), QO₂, QS₂, LiQS₂, V₂O₅, LiV₂O₅, LiIO₂, LiNiVO₄, Li_{3-f}J₂(PO₄)₃ (where 0 ≤ f ≤ 2), Li_{3-f}Fe₂(PO₄)₃ (where 0 ≤ f ≤ 2), and LiFePO₄.

In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material CAM may include, for example, a lithium salt of transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are arranged displaced from each other by 1/2 of a ridge of a unit lattice. The lithium transition metal oxide having the layered rock salt type structure may be a ternary lithium transition metal oxide, such as LiNiₓCo_{y}Al_{z}O₂ (NCA) or LiNiₓCo_{y}Mn_{z}O₂ (NCM) (where 0<x<1,0<y<1, 0<z<1, and x+y+z=1). When the positive electrode active material CAM includes a ternary lithium transition metal oxide having the layered rock salt type structure, the all-solid-state battery 10 may have increased energy density and improved thermal stability.

The compound included in the positive electrode active material CAM may be covered with a coating layer (not shown). The positive electrode active material CAM may be included in a mixture of the compound and a compound to which the coating layer is added. The coating layer added to a surface of the positive electrode active material CAM may include, for example, at least one of oxide, hydroxide, oxyhydroxide, oxycarbonate, or hydrocarbonate of a coating element discussed below. The compound forming the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, Li₂O-ZrO₂ (LZO). A method for forming the coating layer may be one of any methods that do not adversely affect physical characteristics of the positive electrode active material CAM. The method of forming the coating layer may include, for example, spray coating or immersion.

When the positive electrode active material CAM includes nickel (Ni) as a ternary lithium transition metal oxide such as NCA or NCM, a capacity density of the all-solid-state battery 10 may increase to reduce metal elution from the positive electrode active material CAM in a charged state. Therefore, the all-solid-state battery 10 may improve in cycle characteristics in a charged state. The language "cycle characteristics" may refer to properties that indicate the degree to which the all-solid-state battery 10 is degraded due to charge and discharge. For example, the all-solid-state battery 10 with high cycle characteristics may degrade less due to charge and discharge, while the all-solid-state battery 10 with low cycle characteristics may degrade more due to charge and discharge.

The positive electrode active material CAM may have, for example, a substantially spherical or substantially oval particulate shape. There is no limitation on a particle diameter and an amount of the positive electrode active material CAM.

The solid electrolyte SEL may have a particulate shape. The solid electrolyte CAM may be dispersed between the positive electrode active materials CAM. The solid electrolyte SEL may include a sulfide-based solid electrolyte with desired or improved lithium ionic conductivity. The sulfide-based solid electrolyte may include, for example, at least one of Li₂S-P₂S₅, Li₂S-P₂S₅-LiX (where X is or includes at least one of a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive integer, and "Z" is or includes at least one of Ge, Zn, and Ga), Li₂S-GeS₂, Li₂S-SiS₂-Li₃PO₄, Li₂S-SiS₂-LiₚMO_{q} (where p and q are each a positive integer, and "M" is or includes at least one of P, Si, Ge, B, Al, Ga, and In), Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤ 2).

The sulfide-based solid electrolyte may be or include, for example, an argyrodite-type compound including at least one of Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤ 2). For example, the sulfide-based solid electrolyte may be or include an argyrodite-type compound including at least one of Li₆PS₅Cl, Li₆PS₅Br, and Li₆PS₅I.

Alternatively, the sulfide-based solid electrolyte may be or include an argyrodite-type compound including Li₇₋ₐMₐPS_{6-c}X_{c} (where 0 ≤ a ≤ 2 and 0 ≤ c ≤ 2). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density in a range of ≥ 1.5 g/cc to ≤ 2.0 g/cc. As the argyrodite-type solid electrolyte has a density that is equal to or greater than about 1.5 g/cc, it may be possible to decrease an internal resistance of an all-solid-state battery and to hinder or prevent a solid electrolyte layer from short-circuit and penetration caused by the formation of lithium dendrites.

The solid electrolyte SEL may have an elastic modulus in a range of, for example, about 15 GPa to ≤ 35 GPa.

The solid electrolyte SEL may be the same, or substantially the same, as the solid electrolyte included in the solid electrolyte layer 300.

For example, the solid electrolyte SEL included in the positive electrode coating layer 120 may have a medium-sized average particle diameter (D₅₀) that is lower than the average particle diameter of the solid electrolyte SEL included in the solid electrolyte layer 300. For example, the medium-sized average particle diameter (D₅₀) of the solid electrolyte SEL in the positive electrode coating layer 120 may be about equal to or less than about 90%, 80%, 70%, 60%, 50%, 40%, 30%, or 20% of the medium-sized average particle diameter (D₅₀) of the solid electrolyte SEL included in the solid electrolyte layer 300. The average particle diameter (D₅₀) may be a median diameter measured with a laser-type particle size distribution analyzer.

The particulate-shaped solid electrolyte SEL may have a medium-sized average particle diameter (D₅₀) of, for example, equal to or less than about 3 µm, 1 µm, 0.9 µm, or 0.5 µm. The medium-sized average particle diameter (D₅₀) of the solid electrolyte SEL may range, for example, from ≥ 10 nm to ≤ 1 µm, from ≥ 10 nm to ≤ 0.9 µm, or from ≥ 10 nm to ≤ 0.1 µm.

The positive electrode coating layer 120 may include a conductive material CDM. The conductive material CDM may have conductivity without causing a chemical change of the all-solid-state battery 10 which may increase conductivity of the positive electrode active material CAM and the solid electrolyte SEL.

The conductive material CDM may include a carbon-based material. The conductive material CDM may include, for example, one or more of graphite, carbon black, acetylene black, carbon nano-fiber, and carbon nano-tube.

The positive electrode coating layer 120 may include a binder BID. The binder may include a material configured to combine the positive electrode active material CAM, the solid electrolyte SEL, and the conductive material CDM that are included in the positive electrode coating layer 120 with each other to improve adhesion between the positive electrode coating layer 120 and the positive electrode current collector 110.

The binder BID may include at least one of rubber-based binders, acrylate-based binders, imide-based binders, polyvinylidenefluoride-based binders, polyvinylpyrrolidone-based binders, nitrile-based binders, acetate-based binders, and cyano-based binders.

The rubber-based binder may be or include, for example, at least one of styrene-butadiene rubber (SBR), nitrile-butadiene rubber (NBR), hydrogenated nitrile-butadiene rubber (HNBR), or ethylene propylene diene monomer rubber (EPDM).

The acrylate-based binder may be or include, for example, at least one of polyacrylic acid (PAA), polymethylmethacrylate, polyisobutylmethacrylate, polyethylacrylate, polybutyl acrylate, or poly(2-ethylhexyl acrylate).

The imide-based binder may be or include, for example, at least one of polyimide or polyamide imide.

The polyvinylidenefluoride-based binder may be or include, for example, at least one of polyvinylidenefluoride, polyvinylidenefluoride-co-hexafluoropropylene, polyvinylidenefluoride-co-trichloroethylene, polyvinylidenefluoride-co-tetrafluoroethylene, polyvinylidenefluoride-co-trifluoroethylene, polyvinylidenefluoride-co-trifluorochloroethylene, polyvinylidenefluoride-co-ethylenefluoride-hexafluoropropylene, or polyvinylidenefluoride-co-trichloroethylene.

The polyvinylpyrrolidone-based binder may be or include, for example, polyvinylpyrrolidone.

The nitrile-based binder may be or include, for example, at least one of polyacrylonitrile or acrylonitrilestyrene-butadiene copolymer.

The acetate-based binder may be or include, for example, at least one of polyvinyl acetate, polyethylene-co-vinyl acetate, cellulose acetate, cellulose acetate butyrate, or cellulose acetate propionate.

The cyano-based binder may be or include, for example, cyanoethyl sucrose.

In an example embodiment, the binder BID may include at least one of polyvinylidenefluoride, styrene-butadiene rubber, nitrile-butadiene rubber, polytetrafluoroethylene, polyvinylidene fluoride/hexafluoropropylene copolymer, polyacrylonitrile, and polymethyl methacrylate.

Based on the total 100 parts by weight of the positive electrode active material CAM, the solid electrolyte SEL, the conductive material CDM, and the binder BID, the positive electrode active material CAM may be included in an amount in a range of ≥ 80 parts by weight to ≤ 90 parts by weight in the positive electrode coating layer 120. Based on the total 100 parts by weight of the positive electrode active material CAM, the solid electrolyte SEL, the conductive material CDM, and the binder BID, the solid electrolyte SEL may be included in an amount in a range of ≥ 10 parts by weight to ≤ 20 parts by weight in the positive electrode coating layer 120. Based on the total 100 parts by weight of the positive electrode active material CAM, the solid electrolyte SEL, the conductive material CDM, and the binder BID, the binder BID may be included in an amount in a range of ≥ 0.5 parts by weight to ≤ 5 parts by weight in the positive electrode coating layer 120.

Based on 100 parts by weight of the solid electrolyte SEL, the conductive material CDM may be included in an amount in a range of ≥ 1 part by weight to ≤ 50 parts by weight in the positive electrode coating layer 120. When the positive electrode coating layer 120 includes the conductive material CDM in an amount that is less than about 1 part by weight based on 100 parts by weight of the solid electrolyte SEL, a proportion of the conductive material CDM may decrease and may reduce the electrical conductivity of the positive electrode coating layer 120. When the positive electrode coating layer 120 includes the conductive material CDM in an amount that is greater than about 50 parts by weight based on 100 parts by weight of the solid electrolyte SEL, a proportion of the conductive material CDM may excessively or substantially increase and cause incomplete formation of a coating layer that covers a surface of the solid electrolyte SEL.

In the positive electrode coating layer 120, the positive electrode active material CAM and the solid electrolyte SEL may be mixed in a weight ratio in a range of ≥ 60:40 to ≤ 90:10. For example, the positive electrode active material CAM and the solid electrolyte SEL may have a weight ratio of ≥ 70:30, 75:25, 80:20, or 85:15. As the positive electrode active material CAM and the solid electrolyte SEL have the aforementioned weight ratio, sufficient ionic conductivity and smooth activation may be achieved to secure desired or improved output characteristics and capacity of the battery. In an example embodiment, the positive electrode active material CAM and the solid electrolyte SEL may have a weight ratio that is equal to ≤ 85:15.

The positive electrode coating layer 120 may further include an additive, such as or including at least one of a filler, a coating agent, a dispersant, and an ionic conductivity agent, in addition to the positive electrode active material CAM, the solid electrolyte SEL, the conductive material CDM, and the binder BID.

The positive electrode coating layer 120 may be manufactured by, for example, providing on the positive electrode current collector 110 a mixture in which a material of the positive electrode coating layer 120 is dispersed. As the binder BID is included in the material of the positive electrode coating layer 120, it may be possible to stably disperse the positive electrode active material CAM into the mixture. In addition, the binder BID may improve adhesion of the positive electrode coating layer 120. For example, when screen printing is performed to coat the mixture on the positive electrode current collector 110, it may be possible to reduce or suppress screen clogging caused by the binder BID (e.g., clogging resulting from aggregates of a material of the positive electrode coating layer 120).

The following describes a positive electrode slurry and a preparation method thereof, according to an example embodiment.

### Positive Electrode Slurry and Its Preparation Method

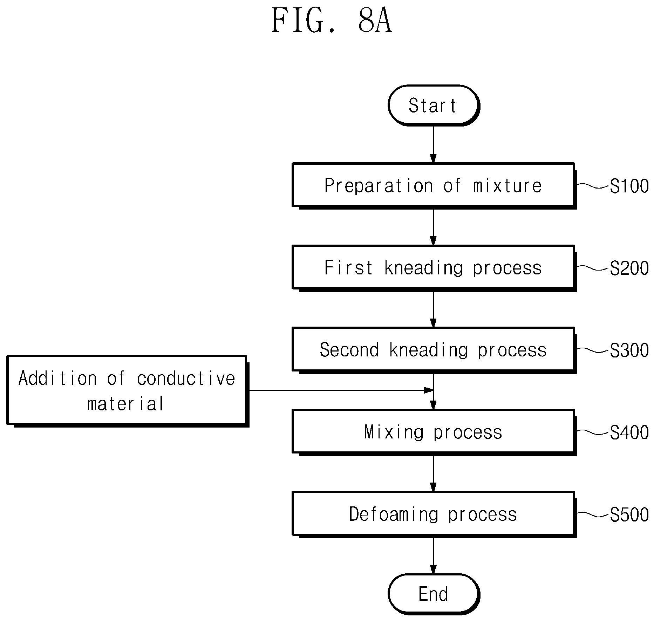

FIG. 8A illustrates a diagram showing a method of manufacturing a positive electrode slurry according to an example embodiment of the present disclosure.

Referring to FIG. 8A, a method of manufacturing a positive electrode slurry for an all-solid-state battery according to an example embodiment of the present disclosure may include preparing a first mixture including a positive electrode active material and a solid electrolyte (S100), performing a first kneading process on a second mixture that has an amount of solid content adjusted to a range of ≥ 94 wt% to ≤ 95 wt% by adding a binder solution to the first mixture (S200), performing a second kneading process on a third mixture that has an amount of solid content adjusted to a range of ≥ 90 wt% to ≤ 93.9 wt% by adding the binder solution to the second mixture (S300), performing a mixing process on a fourth mixture that has an amount of solid content adjusted to a range of ≥ 70 wt% to ≤ 89.9 wt% by adding a conductive material solution to the third mixture (S400), and performing a defoaming process on the fourth mixture released from the mixing process (S500).

The first mixture may be prepared by adding and mixing the positive electrode active material and the solid electrolyte in a vessel (S100).

The positive electrode active material may be the same as the positive electrode active material discussed above in the positive electrode coating layer.

The positive electrode active material according to an example embodiment may be or include a powdered positive electrode active material. For example, the positive electrode active material may include at least one of a lithium transition metal oxide (e.g., at least one of lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material may be included alone, or in a mixture of two or more compounds.

The solid electrolyte may be the same as the solid electrolyte discussed above in the positive electrode coating layer.

The solid electrolyte according to an example embodiment may be or include a powdered solid electrolyte. The solid electrolyte may be or include, for example, an argyrodite-type compound including at least one of Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤ 2). For example, the solid electrolyte may be or include an argyrodite-type compound including at least one of Li₆PS₅Cl, Li₆PS₅Br, and Li₆PS₅I.

The mixing may be performed using a mixer or a kneader. In an example embodiment of the present disclosure, the mixing may be performed at a temperature in a range of ≥ 20 to 50°C for a duration in a range of ≥ 10 minutes to 90 minutes by using, e.g., a planetary disperser (PD) mixer, a planetary mixer, a paddle mixer, a ribbon mixer, a dual shaft mixer, a high-speed impeller mixer, or a propeller mixer.

In an example embodiment of the present disclosure, the mixing may be performed using a planetary disperser (PD) mixer. When the mixing is performed using a planetary disperser (PD) mixer, a speed in rotations per minute (RPM) may be in a range of ≥ 50 rpm to ≤ 150 rpm.

In the first mixture, the positive electrode active material and the solid electrolyte may be mixed in a weight ratio in a range of ≥ 60:40 to ≤ 90:10. For example, the weight ratio of the positive electrode active material to the solid electrolyte may range from about 70:30, 75:25, 80:20, or 85:15.

The first mixture may be or include a dry composite powder including the positive electrode active material and the solid electrolyte.

The first kneading process S200 may be performed on the second mixture prepared by allowing an amount of solid content in the prepared first mixture to be adjusted to a first amount of solid content.

The binder solution may be added to the first mixture in the vessel to prepare the second mixture with a reduced amount of solid content.

The binder solution may be added such that a binder may be present in an amount in a range of ≥ 0.1 wt% to ≤ 5 wt% in the first mixture. When the amount of the binder is less than the range above, a dispersion effect of the solid electrolyte may be reduced in the following first kneading process. When the amount of the binder is greater than the range above, the solid electrolyte may be agglomerated and reduce phase stability of slurry.

The first kneading process S200 may be performed on the prepared second mixture. Thus, the second mixture may include granule-like composite particles produced by the first kneading process S200.

In the composite particle, the positive electrode active material and the solid electrolyte may be included in a weight ratio in a range of ≥ 60:40 to ≤ 90:10. For example, the weight ratio of the positive electrode active material and the solid electrolyte may range from about 70:30, 75:25, 80:20, or 85:15.

The composite particle may have an average particle diameter (D₅₀) in a range of ≥ 0.1 µm to ≤ 10 µm.

The first kneading process S200 according to the present disclosure may be performed on the second mixture with a relatively large amount of solid content.

For example, the second mixture may have a first amount of solid content, and the first amount of solid content may range from ≥ 94 wt% to ≤ 95 wt%. When the first amount of solid content is greater than the range above, a dispersion effect may be reduced due to the inability to form granule-like composite particles within the mixture.

The binder solution included in the first kneading process may include a binder and a solvent.

The binder may be the same as the binder discussed above with respect to the positive electrode coating layer.

The binder may include a material configured to allow the positive electrode active material and the solid electrolyte to have improved adhesion and dispersibility. According to an example embodiment, the binder may include at least one of rubber-based binders, acrylate-based binders, imide-based binders, polyvinylidenefluoride-based binders, polyvinylpyrrolidone-based binders, nitrile-based binders, acetate-based binders, and cyano-based binders.

The binder may be substantially uniformly dispersed in the second mixture, and may be configured to reduce or suppress aggregation of the positive electrode active material and the solid electrolyte. The binder may exhibit desired or improved dispersibility to improve ionic conductivity and adhesion of the positive electrode slurry. In conclusion, according to examples of the present disclosure, the positive electrode slurry may have improved phase stability, ionic conductivity, and adhesion.

The solvent may be or include a non-polar solvent or a low-polarity solvent, and may have extremely or substantially low reactivity with the solid electrolyte while effectively substantially dissolving the binder, thereby achieving an desired viscosity. The solvent may include at least one of isobutyril isobutylate, xylene, toluene, benzene, hexane, or a combination thereof. In an example embodiment, the solvent may be or include anisole.

The binder may be present in an amount in a range of ≥ 0.01 wt% to ≤ 10 wt% in the binder solution. For example, the amount of the binder in the binder solution may range from ≥ 0.5 wt% to ≤ 5 wt%, from ≥ 1 wt% to ≤ 8 wt%, or from ≥ 2 wt% to ≤ 5 wt%.

The first kneading process S200 may be executed with a kneader. For example, a kneading process may be performed using a planetary disperser (PD) mixer, a planetary mixer, a paddle mixer, a ribbon mixer, a dual shaft mixer, a high-speed impeller mixer, or a propeller mixer.

In an example embodiment of the present disclosure, the first kneading process S200 may be performed using a planetary disperser (PD) mixer. When the first kneading process S200 is performed using a planetary disperser (PD) mixer, a speed of RPM of the first kneading process S200 may range from ≥ 50 to ≤ 150.

In an example embodiment, the first kneading process S200 may be performed at a temperature in a range of ≥ 20 °C to 50 °C for a duration in a range of ≥ 20 minutes to 90 minutes.

After the first kneading process S200 is completed, the second mixture may undergo a multi-stage mixing process S210, which is discussed below, such that small granule particles may be adjusted to gradually increase in size step by step. For example, in the multi-stage mixing process S210, the composite particle may be adjusted to gradually increase in size step by step. Thus, the positive electrode active material and the solid electrolyte may be more densely combined.

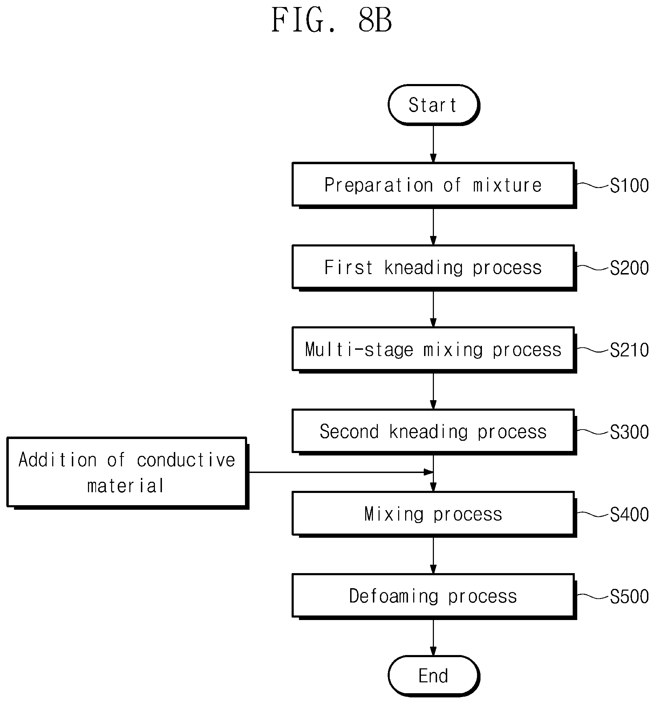

The multi-stage mixing process S210 is further discussed in detail with reference to FIG. 8B.

The second kneading process S300 may be performed on the third mixture prepared by adjusting the solid content of the second mixture, which has experienced the first kneading process S200, to a second amount of solid content.

A binder solution may be added to the second mixture to prepare the third mixture with a reduced amount of solid content.

The second kneading process S300 may be performed on the prepared third mixture. Therefore, the second kneading process S300 may allow the third mixture to become a matte-textured slurry (or dough-like mass) in which relatively small granule-like composite particles are agglomerated.

The second kneading process S300 according to examples of the present disclosure may be performed on the third mixture having an amount of solid content that is relatively small, compared to the first kneading process S200.

The second kneading process S300 according to the present disclosure may be performed on the third mixture with a relatively large amount of solid content.

For example, the third mixture may have a second amount of solid content, and the second amount of solid content may range from ≥ 90 wt% to ≤ 93.9 wt%. For example, the amount of solid content in the third mixture may be less than the amount of solid content in the second mixture. When the second amount of solid content is outside the range above, the matte-textured (or dough-like mass) may not reduce an effect of dispersion or reduce slurry phase stability due to agglomeration of the solid electrolyte.

The binder solution included in the second kneading process S300 may include a binder and a solvent. The binder solution may be the same as the binder discussed above in the first kneading process S200.

The binder may be substantially uniformly dispersed in the third mixture, and may be configured to reduce or suppress aggregation of the positive electrode active material and the solid electrolyte. Therefore, compared to another slurry with the same amount of solid content, the positive electrode slurry according to the present disclosure may have desired or improved dispensability or dispersibility.

The second kneading process S300 may be performed using the kneader discussed above with respect to the first kneading process S200. For example, the first kneading process S200 and the second kneading process S300 may be sequentially performed in a single kneader.

In an example embodiment of the present disclosure, the second kneading process S300 may be performed using a planetary disperser (PD) mixer. When the second kneading process S300 is performed using a planetary disperser (PD) mixer, a speed of RPM of the second kneading process S300 may range from ≥ 50 rpm to ≤ 150 rpm.

In an example embodiment, the second kneading process S300 may be performed at a temperature in a range of ≥ 20 to 50°C for a duration in a range of ≥ 20 minutes to 90 minutes.

Although not shown, before the mixing process S400, a process may further be included to reduce an amount of solid content by adding a binder solution to the third mixture released from the second kneading process S300. The binder solution may be the same as the binder solution discussed above with respect to the first kneading process S200. The addition of the binder solution to the third mixture may convert a matte-textured slurry (e.g., dough-like mass) into a flowable slurry.

For example, the addition of the binder solution may adjust an amount of solid content in the third mixture to a range of ≥ 90 wt% to ≤ 93.9 wt%.

The binder solution may be added such that a binder may be present in an amount in a range of ≥ 2 wt% to ≤ 5 wt% in the third mixture. When the amount of the binder is outside the range above, the binder may have a reduced effect of dispersibility.

The mixing process S400 may be performed on the fourth mixture prepared by adjusting the solid content of the third mixture, which has experienced the second kneading process S300, to a third amount of solid content.

In an example, a conductive material solution may be added to the third mixture to prepare the fourth mixture with a reduced amount of solid content.

The conductive material solution may be added such that a conductive material may be present in an amount in a range of ≥ 0.1 wt% to ≤ 2 wt% in the fourth mixture. When the amount of the conductive material is less than the range above, an effect of electrical conductivity may be reduced. When the amount of the conductive material is greater than the range above, a proportion of the conductive material in the positive electrode coating layer may be excessively or substantially increased to cause an increase in internal resistance.

The conductive material solution included in the mixing process S400 may include a conductive material and a solvent.

The conductive material may be the same as the conductive material discussed above with respect to the positive electrode coating layer.

The conductive material according to an example embodiment may include, for example, one or more of graphite, carbon black, acetylene black, carbon nano-fiber, and carbon nano-tube.

The solvent may be or include a non-polar solvent or a low-polarity solvent. The solvent may include at least one of isobutyril isobutylate, xylene, toluene, benzene, hexane, or a combination thereof. In an example embodiment, the solvent may be anisole.

The conductive material may be present in an amount in a range of ≥ 0.01 wt% to ≤ 10 wt% in the conductive material solution. For example, the amount of the conductive material in the conductive material solution may range from ≥ 0.5 wt% to ≤ 5 wt%, from ≥ 1 wt% to ≤ 8 wt%, or from ≥ 2 wt% to ≤ 5 wt%.

In an example embodiment of the present disclosure, in the mixing process S400, an additive may further be added to the third mixture. For example, the additive may include at least one of a filler, a coating agent, a dispersant, and an ionic conductivity agent.

The fourth mixture may undergo the mixing process S400. Thus, the fourth mixture may undergo the mixing process S400 to reduce an amount of solid content, and to produce a slurry with desired viscosity.

The mixing process S400 according to examples of the present disclosure may be performed on the fourth mixture having an amount of solid content that is relatively small, compared to the second kneading process S300.

For example, the fourth mixture may have a third amount of solid content, and the third amount of solid content may range from ≥ 70 wt% to ≤ 89.9 wt%. For example, the amount of solid content in the fourth mixture may be less than the amount of solid content in the third mixture.

The mixing process S400 may be performed using the kneader discussed above with respect to the first kneading process S200 and the second kneading process S300. For example, the first kneading process S200, the second kneading process S300, and the mixing process S400 may be performed, e.g., sequentially performed, in a single kneader.

In an example embodiment of the present disclosure, the mixing process S400 may be performed using a planetary disperser (PD) mixer. When the mixing process S400 is used using a planetary disperser (PD) mixer, a speed of RPM of the mixing process S400 may range from ≥ 50 rpm to ≤ 150 rpm.

In an example embodiment, the mixing process S400 may be performed at a temperature in a range of ≥ 20 °C to 50 °C for a duration in a range of ≥ 20 minutes to 90 minutes.

The defoaming process S500 may be performed on the fourth mixture released from the mixing process S400. The defoaming process S500 may remove foam that remains within the fourth mixture. The defoaming process S500 may be performed for a duration in a range of ≥ 10 minutes to ≤ 60 minutes.

Referring to FIG. 8B, a method of manufacturing a positive electrode slurry according to an example embodiment of the present disclosure may include preparing a first mixture including a positive electrode active material and a solid electrolyte (S100), performing a first kneading process on a second mixture adjusted to have a first amount of solid content by adding a binder solution to the first mixture (S200), performing a multi-stage mixing process on the second mixture (S210), performing a second kneading process on a third mixture adjusted to have a second amount of solid content by adding the binder solution to the second mixture released from the multi-stage mixing process (S300), performing a mixing process on a fourth mixture adjusted to have a third amount of solid content by adding a conductive material solution to the third mixture (S400), and performing a defoaming process on the fourth mixture released from the mixing process (S500). The first amount of solid content may be greater than the second amount of solid content, and the second amount of solid content may be greater than the third amount of solid content.

In the example embodiment that follows, a detailed description of technical features that are redundant to the technical features discussed above with reference to FIG. 8A is omitted, and a difference thereof is discussed in detail.

According to an example embodiment, after the first kneading process S200 is performed, the multi-stage mixing process S210 may be performed on the second mixture.

The second mixture may include granule-like composite particles produced by the first kneading process S200. In the composite particle, the positive electrode active material and the solid electrolyte may be included in a weight ratio in a range of ≥ 60:40 to ≤ 90:10. For example, the weight ratio of the positive electrode active material and the solid electrolyte may range from about 70:30, 75:25, 80:20, or 85:15.

The composite particle may have an average particle diameter (D₅₀) in a range of ≥ 0.1 µm to ≤ 10 µm.

In each stage of the multi-stage mixing process S210, the composite particle may be adjusted to have an increased average particle diameter (D₅₀). For example, in the multi-stage mixing process S210, the second mixture may repeatedly undergo a mixing process to allow the composite particles to have an average particle diameter (D₅₀) which size is stepwise increased in a range of ≥ 0.1 µm to ≤ 10 µm, such that the composite particles in the second mixture may have an increased average particle diameter (D₅₀).

For example, in the multi-stage mixing process S210 according to the present disclosure, a mixing process may be performed multiple times without adjusting an amount of solid content. The multi-stage mixing process S210 according to an example embodiment of the present disclosure may be performed in two to five stages.

For example, the multi-stage mixing process S210 may adjust the composite particle to gradually increase in size step by step. Thus, the positive electrode active material and the solid electrolyte may be more densely combined.

The multi-stage mixing process S210 may be performed using the kneader discussed above in the first kneading process S200. For example, the first kneading process S200, the multi-stage mixing process S210, the second kneading process S300, and the mixing process S400 may be sequentially performed within one kneader.

For example, the multi-stage mixing process S210 may be performed using a planetary disperser (PD) mixer, a planetary mixer, a paddle mixer, a ribbon mixer, a dual shaft mixer, a high-speed impeller mixer, or a propeller mixer.

In an example embodiment of the present disclosure, the multi-stage mixing process S210 may be performed using a planetary disperser (PD) mixer. When the multi-stage mixing process S210 is used using a planetary disperser (PD) mixer, a speed of RPM of the multi-stage mixing process S210 may range from 50 rpm to ≤ 150 rpm.

In an example embodiment, the multi-stage mixing process S210 may be performed at a temperature in a range of ≥ 20 °C to 50 about ≥ °C for a duration in a range of ≥ 20 minutes to 90 minutes.

In a method of manufacturing a positive electrode slurry according to the present disclosure, the split addition of the binder solution and the multi-stage mixing process may be performed on a dry-state mixture including the positive electrode active material and the solid electrolyte to progressively increase a granule size, and then the conductive material solution may be added to convert a matte-textured slurry (e.g. dough-like mass) into a flowable positive electrode slurry.

Compared to other slurry having the same amount of solid content, the fourth mixture (or the positive electrode slurry) obtained using a method of manufacturing a positive electrode slurry may have relatively low viscosity and desired or improved dispersibility.

For example, according to measurement results of shear viscosity of the positive electrode slurry for an all-solid-state battery in accordance with the present disclosure, under the condition of ≥ 20°C and a shear rate of 10 (1/s), the positive electrode slurry may have a viscosity ranging from ≥ 1,000 mPa·s to ≤ 10,000 mPa·s or from ≥ 1,000 mPa·s to ≤ 5,000 mPa·s.

In a positive electrode coating layer manufactured using the positive electrode slurry, as shown in FIG. 7B, the positive electrode active material CAM and the solid electrolyte SEL may be substantially uniformly dispersed while being densely in contact with each other, and particles of the conductive material CDM may surround a surface of the composite particle including the positive electrode active material CAM and the solid electrolyte SEL.

As a result, a positive electrode slurry according to the present disclosure may have desired or improved electrical properties such as dispersibility, adhesion, and phase stability. Therefore, an all-solid-state battery fabricated using the positive electrode slurry of the present disclosure may have superior or improved performance.

Herein, the present disclosure is discussed in detail through example embodiments. These example embodiments, however, are provided to illustrate the present disclosure, and the scope of the present disclosure is not limited to these embodiments.

### Embodiment 1: Manufacture of Positive Electrode Slurry

83 wt% of LiNi_{0.8}Co_{0.15}Mn_{0.05}O₂ (NCM) powder and 15 wt% of solid electrolyte (Li₆PS₅Cl) powder were added to and mixed in a planetary despa (PD) mixer, thereby preparing a first mixture. The mixing was performed using a planetary despa (PD) mixer at 100 rpm for 60 minutes (S100).

The first mixture was added with a polyvinylidenefluoride (PVdF) binder solution with 10 wt% of solid content to prepare a second mixture which amount of solid content was adjusted to ≤ 94.3 wt%. The second mixture was added to a planetary despa (PD) mixer and a first kneading process was performed. The first kneading process was performed using the planetary despa mixer at 50 rpm for 20 minutes (S200).

The planetary despa mixer was utilized to additionally perform a multi-stage mixing process on the second released from the first kneading process. The multi-stage mixing process was performed in total three stages using the planetary despa mixer at 80 rpm for 20 minutes, at 100 rpm for 30 minutes, and at 100 rpm for 10 minutes (S210).

The second mixture released from the multi-stage mixing process was additionally added with a polyvinylidenefluoride (PVdF) binder solution with 10 wt% of solid content to prepare a third mixture which amount of solid content was adjusted to ≤ 93.9 wt%. The third mixture was added to the planetary despa mixer and a second kneading process was performed. The second kneading process was performed using the planetary despa mixer at 70 rpm for 30 minutes (S300).

The third mixture released from the second kneading process was additionally added with a polyvinylidenefluoride (PVdF) binder solution, amount of solid content was adjusted to ≤ 89.6 wt%.

The third mixture was added with a pre-dispersion solution of conductive material (carbon nano-tube) with 3 wt% of solid content to prepare a fourth mixture which ultimate amount of solid content was adjusted to ≤ 75 wt%. The fourth mixture was added to the planetary despa mixer and a mixing process was performed. The mixing process was performed using the planetary despa mixer at 150 rpm for 60 minutes.

The fourth mixture released from the mixing process was vacuum defoamed for 60 minutes to eventually manufacture a positive electrode slurry (S500).

Table 1 below lists in detail the steps of preparing the mixtures in Embodiment 1.

**Table 1:**

| Step | Item | Category | Solid content | Planetary | Despa | Time |
|---|---|---|---|---|---|---|
| | | | % | Rpm | rpm | min |
| S100 | Input | Addition of solid electrolyte | 100.0 | - | - | - |
| | Input | Addition of active material | 100.0 | - | - | - |
| | RUN | Mixing | - | 100 | - | 60 |
| S200 | Input | Addition of binder solution | 94.3 | - | - | - |
| | RUN | First kneading | - | 50 | - | 20 |
| S210 | RUN | Multi-stage mixing (first stage) | - | 80 | 500 | 20 |
| | RUN | Multi-stage mixing (second stage) | - | 100 | 500 | 30 |
| | RUN | Multi-stage mixing (third stage) | - | 100 | 1000 | 10 |
| S300 | Input | Addition of binder solution | 93.9 | - | - | - |
| | RUN | Second kneading | - | 70 | - | 30 |
| S400 | Input | Addition of binder solution | 89.6 | - | - | - |
| | Input | Addition of conductive material solution | 75.0 | - | - | - |
| | RUN | Mixing | - | 150 | 2300 | 60 |
| S500 | RUN | Vacuum defoaming | - | 20 | - | 60 |

### Embodiment 2

A positive electrode slurry was manufactured in the same method as in Embodiment 1, with a differences that a second mixture was prepared which amount of solid content was adjusted to ≤ 93.9 wt% and a third mixture was prepared which amount of solid content was adjusted to ≤ 89.9 wt%.

### Comparative 1: Positive Electrode Slurry Manufactured without Multi-Stage Mixing Process

83 wt% of LiNi_{0.8}Co_{0.15}Mn_{0.05}O₂ (NCM) powder and 15 wt% of solid electrolyte (Li₆PS₅Cl) powder were added to and mixed in a planetary despa (PD) mixer, thereby preparing a first mixture. The mixing was performed using the planetary despa mixer at 100 rpm for 60 minutes (S100).

The first mixture was added with a polyvinylidenefluoride (PVdF) binder solution with 10 wt% of solid content to prepare a second mixture which amount of solid content was adjusted to ≤ 92.9 wt%. The second mixture was added to the planetary despa mixer and a first kneading process was performed. The first kneading process may be performed using the planetary despa mixer at 50 rpm for 30 minutes (S200).

The planetary despa mixer was utilized to additionally perform a mixing process on the second mixture released from the first kneading process. The mixing process was performed using the planetary despa mixer at 100 rpm for 40 minutes.

The second mixture released from the mixing process was additionally added with a polyvinylidenefluoride (PVdF) binder solution with 10 wt% of solid content to prepare a third mixture which amount of solid content was adjusted to ≤ 89.6 wt%. The third mixture was added to the planetary despa mixer and a second kneading process was performed. The second kneading process was performed using the planetary despa mixer at 50 rpm for 40 minutes (S300).

The third mixture was added with a pre-dispersion solution of conductive material (carbon nano-tube) with 3 wt% of solid content to prepare a fourth mixture which ultimate amount of solid content was adjusted to ≤ 75.0 wt%. The fourth mixture was added to the planetary despa mixer and a mixing process was performed. The mixing process was performed using the planetary despa mixer at 120 rpm for 160 minutes (S400).

The fourth mixture released from the mixing process was vacuum defoamed for 60 minutes to eventually manufacture a positive electrode slurry (S500).

Table 2 below lists in detail the steps of preparing the mixtures in Comparative 1.

**Table 2:**

| Step | Item | Category | Solid content | Planetary | Despa | Time |
|---|---|---|---|---|---|---|
| | | | % | rpm | rpm | min |
| S100 | Input | Addition of solid electrolyte | 100.0 | - | - | - |
| | Input | Addition of active material | 100.0 | - | - | - |
| | RUN | Mixing | - | 100 | - | 60 |
| S200 | Input | Addition of binder solution | 92.9 | - | - | - |
| | RUN | First kneading | - | 50 | - | 30 |
| - | RUN | Mixing | - | 100 | 500 | 40 |
| S300 | Input | Addition of binder solution | 89.6 | - | - | - |
| | RUN | Second kneading | - | 50 | 1500 | 40 |
| S400 | Input | Addition of conductive material solution | 75.0 | - | - | - |
| | RUN | Mixing | - | 120 | 2300 | 160 |
| S500 | RUN | Vacuum defoaming | - | 20 | - | 60 |

### Comparative 2: Positive Electrode Slurry manufactured by Pre-Addition of Conductive Material, and then Performing of Kneading Process

A positive electrode slurry was manufactured in the same method as in Embodiment 1, with a difference that 83 wt% of LiNi_{0.8}Co_{0.15}Mn_{0.05}O₂ (NCM) powder, 15 wt% of solid electrolyte (Li₆PS₅Cl), and 3 wt% of conductive material (carbon nano-tube) were added to and mixed in a planetary despa (PD) mixer to prepare a first mixture, and that the third mixture released from the second kneading process was additionally added with a polyvinylidenefluoride (PVdF) binder solution with 10 wt% of solid content to prepare a fourth mixture which ultimate amount of solid content was adjusted to ≤ 75.0 wt%.

### Evaluation 1: State of Mixture in Each Step

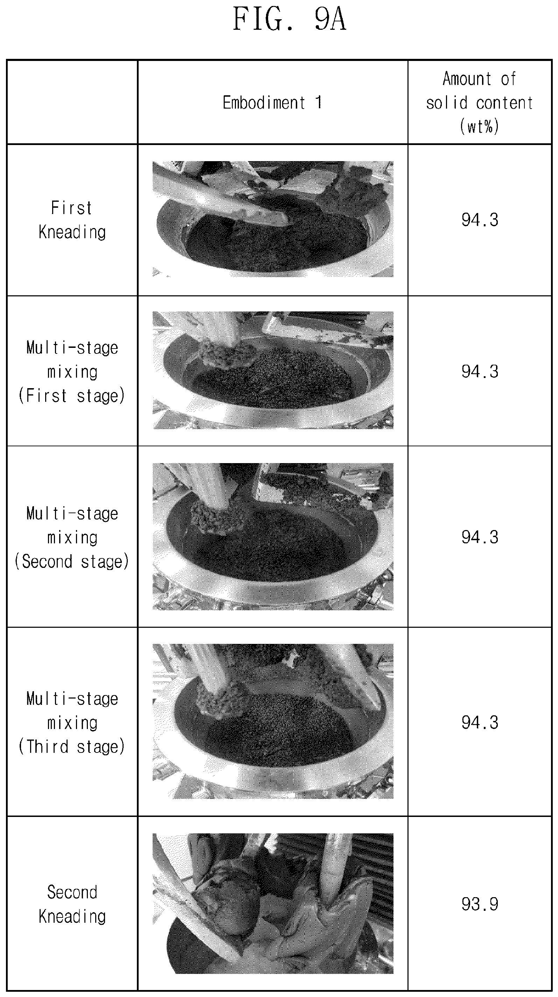

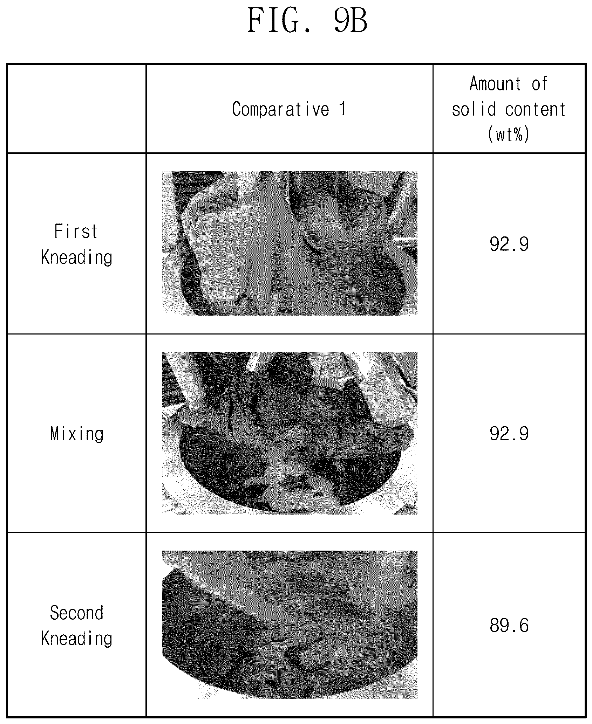

FIGS. 9A and 9B illustrate images showing states of mixtures at their respective steps in preparation methods of Embodiment 1 and Comparative 1, respectively.

Referring to FIG. 9A, the mixture released from the first kneading process of Embodiment 1 may include small granule particles. It may be observed that sizes of the small granule particles grow step by step through the multi-stage mixing process in Embodiment 1. It may be observed that the mixture released from the second kneading process has matte properties (e.g., dough-like mass).

Referring to FIG. 9B, it may be observed that the mixture released from the first kneading process has matte properties (e.g., dough-like mass) in Comparative 1. It may be ascertained that the mixture released from the second kneading process is shaped like a flowable slurry.

### Evaluation 2: Measurement of Shear Viscosity

A rheometer commercially available from Anton Paar Company was utilized to measure the shear viscosity of the positive electrode slurry in Embodiment 1 and Comparative 1. 10 ml of the positive electrode slurry was introduced into equipment to measure the shear viscosity.

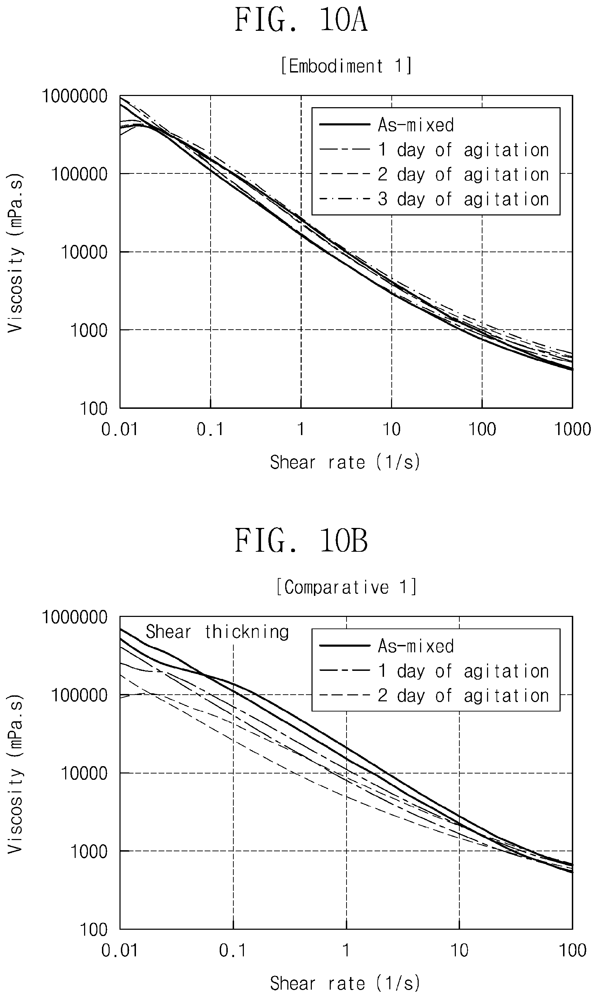

Phase stability was evaluated by measuring the shear viscosity of the positive electrode slurry in the examples and the comparative examples at room temperature (25°C) and a shear rate of 10 (1/s) immediately after the manufacture and after 1 to 3 days of agitation. The results were shown in FIGS. 10A and 10B.

Referring to FIG. 10A, it was observed that the shear viscosity of the positive electrode slurry in Embodiment 1 was ≥ 1,000 mPa·s to ≤ 10,000 mPa·s at 20°C and a shear rate of 10 (1/s). In addition, no shear thickening was generated in the positive electrode slurry of Embodiment 1. It may be ascertained that the positive electrode slurry of Embodiment 1 shows a slight increase in viscosity after being stored for 3 days compared to the viscosity on the day of production.

In contrast, referring to FIG. 10B, a shear thickening was generated in the positive electrode slurry of Comparative 1. It may be ascertained that the positive electrode slurry of Comparative 1 shows a large increase in viscosity after being stored for 2 days compared to the viscosity on the day of production.

Through this, it may be observed that, although the positive electrode slurry of Embodiment 1 and the positive electrode slurry of Comparative 1 have the same amount of solid content, the positive electrode slurry of Embodiment 1 exhibits a small viscosity change over time compared to the positive electrode slurry of Comparative 1. That is, it may be ascertained that, compared to the positive electrode slurry of Comparative 1, the positive electrode slurry of Embodiment 1 has desired or improved phase stability caused by an even dispersion of component particles without agglomeration in the slurry.

### Evaluation 3: Filtration

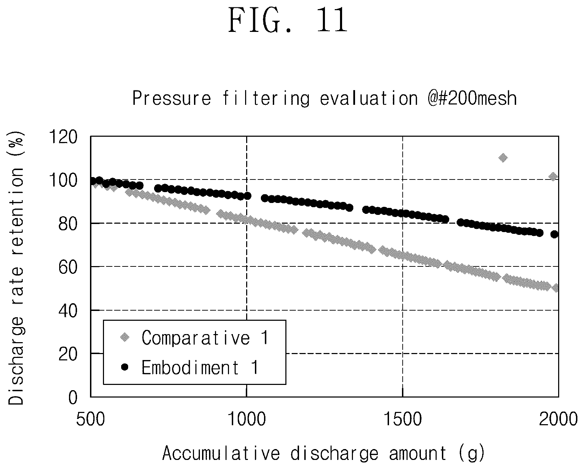

For the positive electrode slurry manufactured in each of Embodiment 1 and Comparative 1, a filtration test was conducted in which the positive electrode slurry was placed above a 200-mesh filter in a specially designed apparatus where a pressure was reduced below the filter to allow the positive electrode slurry to move downwards through the filter. For example, a discharge rate retention (%) of the positive electrode slurry passing through the filter was measured in terms of the amount per hour, and the result was shown in FIG. 11. FIG. 11 illustrates a graph showing evaluation results of pressure filtration of the positive electrode slurry according to an embodiment and the positive electrode slurry according to a comparative example.

A higher discharge rate retention (%) may indicate a greater discharge amount per hour, and this may mean that filtration clogging is unlikely to occur when the positive electrode slurry is supplied to a coating die during positive electrode coating, thereby improving processability.

Referring to FIG. 11, in the case of the positive electrode slurry manufactured in Embodiment 1, the discharge rate retention (%) was measured to be greater than the discharge rate of the positive electrode slurry prepared in Comparative 1. This may confirm that components included in the positive electrode slurry manufactured in Embodiment 1 are sufficiently dispersed.

### Evaluation 4: Ionic Conductivity and Electronic Conductivity of Positive Electrode

A symmetric ion blocking cell was fabricated using one of the positive electrodes manufactured in the examples and the comparative examples, and electrochemical impedance spectroscopy (EIS) was performed on the positive electrode plate. At this time, the EIS was conducted with an amplitude of ≥ 10 mV and a frequency of ≥ 0.1 Hz to ≤ 106 Hz in an air atmosphere at 45°C. The positive electrode plate may be a mixed conductor capable of simultaneous or contemporaneous transport of electrons and ions, and it may be possible to design a corresponding equivalent circuit. The impedance analysis yielded a Nyquist plot, from which the ionic and electronic conductivities were separately extracted for the positive electrode plate. The results were listed in Table 3 below.

**Table 3:**

| Category | Ionic conductivity (mS/cm) | Electronic conductivity (mS/cm) |
|---|---|---|
| Embodiment 1 | 0.07 | 0.7 |
| Embodiment 2 | 0.08 | 0.6 |
| Comparative 1 | 0.03 | 0.2 |
| Comparative 2 | 0.04 | 0.3 |

Referring to Table 3 above, it may be observed that the positive electrode plate according to Embodiment 1 has an ionic conductivity of 0.07 mS/cm, and that the positive electrode plate according to Embodiment 2 has an ionic conductivity of 0.08 mS/cm. In contrast, it may be observed that the positive electrode plates according to Comparative 1 and Comparative 2 have their respective ionic conductivities of 0.03 mS/cm and 0.04 mS/cm. Accordingly, it may be ascertained that the positive electrode slurry of Embodiments 1 and 2 has an ionic conductivity that is greater than the ionic conductivity of the positive electrode slurry of Comparative 1.

In the present disclosure, a multi-stage mixing process may be performed on a mixture with a solid content, and a conductive material may be subsequently added to manufacture a positive electrode slurry, thereby closely combining a positive electrode active material and a solid electrolyte to improve ionic conductivity.

### Evaluation 5: Lifespan Characteristics of All-Solid-State Battery

A shutter coater was utilized to coat on an aluminum foil current collector a positive electrode slurry manufactured according to the examples and the comparative examples, thereby manufacturing a positive electrode. The prepared positive electrode, a negative electrode, and a solid electrolyte layer were cut, and then the solid electrolyte layer was stacked on the positive electrode, followed by stacking the negative electrode thereon. The resultant structure was sealed in a pouch form, and subject to a high temperature of 85°C and 500 MPa for 30 minutes using a warm isostatic press (WIP) to fabricate an all-solid-state battery.

In this evaluation, an initial charge-discharge performance of the all-solid-state battery was checked, and the all-solid-state battery was charged and discharged under a constant current mode in a charge-discharge tester.

To evaluate the initial performance of the all-solid-state battery, a formation cycle was performed under the following conditions. For example, the battery was charged with a constant current of 0.1 C rate at 45°C until a voltage reached 4.25 V (vs. Li), and then was cut-off at a current of 0.05 C rate while maintaining 4.25 V in a constant voltage mode. Afterwards, the battery was discharged with a constant current of 0.1 C rate until a voltage reached 2.5 V (vs. Li).

A discharge capacity based on the formation cycle was measured, and Coulombic efficiency (%) was calculated as a ratio of the discharge capacity to a charge capacity in the cycle, and the results were listed in Table 4.

In addition, an initial direct current internal resistance (DC-IR) was measured using ΔV/ΔI (voltage change/current change), and the results were listed in Table 4 below.

**Table 4:**

| | Comparative 1 | Embodiment 1 |
|---|---|---|
| C.E (Coulombic efficiency) | 82.6% | 83.6% |
| Charge Capacity (mAh) | 368.0 | 378.4 |
| Discharge Capacity (mAh) | 303.9 | 316.4 |
| DC-IR (mΩ) | 1.45 | 1.14 |

As shown in Table 4 above, the all-solid-state battery using the positive electrode according to the examples of the present disclosure was found to exhibit improved cycle characteristics compared to the comparative examples.

Thus, when using the positive electrode slurry described in the claims of the present disclosure, the positive electrode slurry may exhibit desired or improved dispersibility and homogeneity to obtain a positive electrode coating layer with a uniform composition when the positive electrode slurry is coated on a positive electrode current collector. Therefore, it may be ascertained that it is possible to fabricate an all-solid-state battery with superior or improved performance.

A method of manufacturing a positive electrode slurry for an all-solid-state battery according to an example embodiment of the present disclosure may provide a positive electrode slurry having improved dispersion and ionic conductivity.

In the present disclosure, the positive electrode slurry discussed above may be applied to provide a positive electrode having desired or improved performance and an all-solid-state battery including the same.

Although some example embodiments of the present disclosure have been discussed with reference to accompanying figures, it is understood that various changes in form and details may be made therein without departing from the spirit and scope of the present disclosure. It therefore is understood that the example embodiments described above are just illustrative but not limitative in all aspects.

## Claims

1. A method of manufacturing a positive electrode slurry for an all-solid-state battery (10), the method comprising:
preparing a first mixture comprising a positive electrode active material and a solid electrolyte;
adding a binder solution to the first mixture to perform a first kneading process on a second mixture having an amount of solid content adjusted to a range of ≥ 94 wt% to ≤ 95 wt%;
adding the binder solution to the second mixture to perform a second kneading process on a third mixture having an amount of solid content adjusted to a range of ≥ 90 wt% to ≤ 93.9 wt%; and
adding a conductive material solution to the third mixture to perform a mixing process on a fourth mixture having an amount of solid content adjusted to a range of ≥ 70 wt% to ≤ 89.9 wt%.

2. The method of claim 1, wherein, in the first mixture, the positive electrode active material and the solid electrolyte are included in a weight ratio in a range of ≥ 60:40 to ≤ 90:10.

3. The method of claim 1 or 2 , wherein the second mixture comprises a composite particle including the positive electrode active material and the solid electrolyte,
wherein, in the composite particle, the positive electrode active material and the solid electrolyte are included in a weight ratio in a range of ≥ 60:40 to ≤ 90: 10.

4. The method of any of the claims 1 to 3, wherein an average particle diameter of the composite particle is in a range of ≥ 0.1 µm to ≤ 10 µm.

5. The method of any of the claims 1 to 4, wherein the binder solution comprises a binder and a solvent,
wherein an amount of the binder in the binder solution is in a range of ≥ 0.1 wt% to ≤ 10 wt%.

6. The method of any of the claims 1 to 5, wherein the binder comprises at least one of rubber-based binders, acrylate-based binders, imide-based binders, polyvinylidenefluoride-based binders, polyvinylpyrrolidone-based binders, nitrile-based binders, acetate-based binders, and cyano-based binders.

7. The method of any of the claims 1 to 6, wherein at least one of the first kneading process and the second kneading process is performed at a temperature in a range of ≥ 20°C to ≤ 50°C for a duration in a range of ≥ 20 minutes to ≤ 90 minutes by using one of a planetary disperser mixer, a planetary mixer, a paddle mixer, a ribbon mixer, a dual shaft mixer, a high-speed impeller mixer, and a propeller mixer.

8. The method of any of the claims 1 to 7, wherein the conductive material solution comprises a conductive material and a solvent,
wherein an amount of the conductive material in the conductive material solution is in a range of ≥ 0.01 wt% to ≤ 10 wt%.

9. The method of any of the claims 1 to 8, wherein the mixing process is performed at a temperature in a range of ≥ 20°C to ≤ 50°C for a duration in a range of ≥ 20 minutes to ≤ 90 minutes by using one of a planetary disperser mixer, a planetary mixer, a paddle mixer, a ribbon mixer, a dual shaft mixer, a high-speed impeller mixer, and a propeller mixer.

10. The method of any of the claims 1 to 9, further comprising performing a defoaming process on the fourth mixture released from the mixing process.

11. A method of manufacturing a positive electrode slurry for an all-solid-state battery, the method comprising:
preparing a first mixture comprising a positive electrode active material and a solid electrolyte;
adding a binder solution to the first mixture to perform a first kneading process on a second mixture adjusted to have a first amount of solid content;
performing a multi-stage mixing process on the second mixture;
adding the binder solution to the second mixture released from the multi-stage mixing process to perform a second kneading process on a third mixture adjusted to have a second amount of solid content; and
adding a conductive material solution to the third mixture to perform a mixing process on a fourth mixture adjusted to have a third amount of solid content,
wherein the first amount of solid content is greater than the second amount of solid content, and
wherein the second amount of solid content is greater than the third amount of solid content.

12. The method of claim 11, wherein:
the first amount of solid content is in a range of ≥ 94 wt% to ≤ 95 wt%,
the second amount of solid content is in a range of ≥ 90 wt% to ≤ 93.9 wt%, and
the third amount of solid content is in a range of ≥ 70 wt% to ≤ 89.9 wt%.

13. The method of claim 11 or 12, wherein the second mixture comprises a composite particle including the positive electrode active material and the solid electrolyte,
wherein each stage of the multi-stage mixing process comprises adjusting the composite particle to have an average particle diameter (D₅₀) which size is stepwise increased in a range of ≥ 0.1 µm to ≤ 10 µm.

14. The method of any of the claims 11 to 13, wherein at least one of the first kneading process and the second kneading process is performed at a temperature in a range of ≥ 20°C to ≤ 50°C for a duration in a range of ≥ 20 minutes to ≤ 90 minutes by using one of a planetary disperser mixer, a planetary mixer, a paddle mixer, a ribbon mixer, a dual shaft mixer, a high-speed impeller mixer, and a propeller mixer.

15. The method of any of the claims 11 to 14, wherein the multi-stage mixing process is performed at a temperature in a range of ≥ 20°C to ≤ 50°C for a duration in a range of ≥ 20 minutes to ≤ 90 minutes by using one of a planetary disperser mixer, a planetary mixer, a paddle mixer, a ribbon mixer, a dual shaft mixer, a high-speed impeller mixer, and a propeller mixer.
